# EUROPÄISCHE PATENTANMELDUNG

(11) **EP 1 504 843 A1**
(43) Veröffentlichungstag der Anmeldung: **09.02.2005**
(21) Anmeldenummer: 04026103.4
(22) Anmeldetag: 20.12.2001
(51) Int. Cl.: B23K 26/08, F01D 5/14

(54) **Verfahren zum Laserschweissen eines Werkstückes**

(30) Priorität: 27.12.2000 EP 00128575
(62) Teilanmeldung aus: 01271823.5
(71) Anmelder: SIEMENS AKTIENGESELLSCHAFT, 80333 München (DE)
(72) Erfinder: Beck, Thomas, 16341 Zepernick (DE); Cox, Nigel-Philip, 10119 Berlin (DE); Settegast, Silke, 10439 Berlin (DE); Wilkenhöner, Rolf, Dr., 14532 Kleinmachnow (DE)

(57) **Zusammenfassung**

Die Erfindung betrifft ein Verfahren zum Laserschweißen eines Werkstückes (1) entlang einer Schweißlinie (20), bei dem ein Laserstrahl (13) durch Bewegung einer optischen Ablenkeinheit (17) entlang der Schweißlinie (20) geführt wird. Hierdurch sind hohe Bewegungsgeschwindigkeiten bei apparativ geringem Aufwand erreichbar. Insbesondere eignet sich dieses Verfahren zur Einschweißung von Verschlussstiften und gussbedingten Öffnungen (7) von Gasturbinenschaufeln (1).

## Beschreibung

Die Erfindung betrifft ein Verfahren zum Laserschweißen eines Werkstückes, insbesondere das Einschweißen eines Verschlussstiftes in eine gussbedingte Öffnung einer gegossenen Gasturbinenschaufel.

In der WO 00/19065 ist eine Gasturbinenlaufschaufel und ein Verfahren zur Herstellung einer Gasturbinenlaufschaufel beschrieben. Um eine solche kühlmitteldurchströmte, gegossene Gasturbinenlaufschaufel, die Durchgangsöffnungen aufweist, von denen zumindest eine gussherstellungsbedingt ist, so auszubilden, dass sie bei geringem Ausschuss und unter weitgehender Vermeidung von Gießfehlern herzustellen ist, wird vorgeschlagen, dass eine oder mehrere der gussherstellungsbedingten Durchgangsöffnungen von einem nietartigen Verschlussstift durchgriffen ist bzw. sind, dessen Fuß an der gegenüberliegenden Seite einer Stirnwand gefesselt ist.

Die US-PS 4,626,653 und US-PS 4,896,944 offenbaren ein Verfahren zum Schweißen, bei dem der Laserstrahl um seine Achse rotiert wird.

Die US-PS 4,461,947 offenbart ein Verfahren, bei dem der Laserstrahl rotiert wird und ein Gasstrahl beabstandet zum Laserstrahl auf das zu bearbeitende Werkstück auftrifft.

Zur Realisierung eines hohen Wirkungsgrades der Gasturbine ist eine möglichst hohe Arbeitsgastemperatur erforderlich. Die durch hohe bzw. wechselnde Temperaturen, Drücke und Fliehkräfte stark belasteten Laufschaufeln der Gasturbine sind metallische Hohlkörper, deren Hohlräume von Kühlmittel durchströmt werden. Ein Kühlmittelstrom läuft vom Fuß der Gasturbinenlaufschaufel, mit welchem dieser an ein Laufrad befestigt ist, durch einen inneren Hohlraum mit mäandrierenden Luftleitkammern zu Auslassöffnungen im Flügelbereich oder im spitzen Bereich der Gasturbinenlaufschaufel und bildet auf der Außenwand der Gasturbinenlaufschaufel einen Kühlfilm.

Um den Anteil von ungenutzt am Randbereich der Gasturbinenlaufschaufeln vorbeiströmenden Arbeitsgas zu minimieren, ist das Laufrad mit den eingesetzten Gasturbinenlaufschaufeln so innerhalb der Gasturbine angeordnet, dass die Einhüllende der Spitzen der Gasturbinenlaufschaufeln in einem möglichst geringen Abstand zum Innenumfang eines umlaufenden, statischen Führungsrings verläuft. Hierbei muss neben einer engen Passung sichergestellt sein, dass die Gasturbinenlaufschaufel nicht beschädigt und der radial äußere Spitzenbereich ausreichend gekühlt wird. In diesem Spitzenbereich ist die spitzenseitige Außenwand der Gasturbinenlaufschaufel deshalb von vorstehenden Randstegen umgeben, den Anstreifkanten. Eine Kühlung dieses Anstreifkantenbereichs erfolgt mittels eines Kühlmittelstromes, der von den inneren Hohlräumen durch Durchgangsöffnungen in der anstreifkantenseitigen Stirnwand in den Anstreifkantenbereich fließt und dort durch Öffnungen in den Anstreifkanten wieder herausgeleitet wird, wie in der US A 4,761,116 offenbart.

Eine Gasturbinenlaufschaufel mit Innenkühlung und Durchgangsöffnungen zur Kühlung des Anstreifkantenbereichs mit einstöckigem Aufbau ist aus der EP 0 340 149 B1 bekannt. Die Herstellung einer derartigen Gasturbinenlaufschaufel stellt erhöhte Anforderungen an den Aufbau der Gussformen und insbesondere des Kernes der Gussformen. Um eine gleichbleibende Kühlung des Anstreifkantenbereiches sicherzustellen, muss die Dicke der anstreifkantenseitigen Stirnwand zwischen Hohlraum und Anstreifkantenbereich mit engen Toleranzen gefertigt sein. Der Kernteil des Hohlraumsystems wird mit dem Kernteil des Anstreifkantenbereiches starr verbunden und beide auf diese Weise beim Gießprozess in einen festgelegten, konstanten Abstand voneinander gehalten. Diese Verbindung wird durch Sicherungsstifte hergestellt, die in beiden Kernteilen verankert sind. Diese Sicherungsstifte sind beim Gießprozess einer großen Belastung unterworfen, wodurch sie leicht brechen. Hierdurch sind die Sicherungsstifte mit einem relativ großen Durchmesser auszubilden. Durch diese großen Durchmesser entstehen jedoch große Durchgangsöffnungen in der anstreifkantenseitigen Stirnwand der gegossenen Gasturbinenlaufschaufel zwischen Hohlraum und Anstreifkantenbereich. Damit wird die Leckage des durch die Durchgangsöffnungen hindurchfließenden Kühlmittels sehr hoch. Eine Möglichkeit zur Verringerung der Leckage des Kühlmittels besteht darin, die durch die Sicherungsstifte entstandenen großen Durchlassöffnungen zuzuschweißen oder ein Abdeckblech aufzuschweißen. Das hat den Nachteil, dass hierdurch Risse induziert werden können, die beim Betrieb der Gasturbinenlaufschaufel wachsen. Auch können durch die hohen Temperaturen beim Schweißen Rekristallisationsvorgänge einsetzen, die das Material an den betreffenden Stellen insbesondere bei einkristallinen und gerichtet erstarrten Gasturbinenlaufschaufeln schwächen. Die große Belastung durch die Fliehkraft bei rotierenden Gasturbinenlaufschaufeln führt häufiger zum teilweisen oder vollständigen Ablösen des Abdeckblechs.

Die US A 3,761,201 beschreibt ein Verfahren zum Verschließen der gussbedingten Öffnungen in einer Gasturbinenschaufel. In die gussbedingten Öffnungen wird passgenau ein Verschlussstift eingesetzt, der einen höheren Wärmeausdehnungskoeffizienten aufweist als das umgebende Material. Durch ein anschließendes Aufheizen wird eine Diffusionsverschweißung erreicht.

In dem Buch "Wissensspeicher Lasertechnik" von Witlof Brunner und Klaus Junge, VEB Fachbuchverlag Leipzig 1989, ist auf den Seiten 291 bis 305 das Bearbeiten und Schweißen mit Laser beschrieben. Den Aufbau einer Lasermaterialbearbeitungsanlage zeigt z.B. Bild 4.4 auf Seite 291. Ein Laserstrahl wird in einer starr angeordneten Laserstrahlführung auf ein Werkstück geleitet, welches auf einem verschieblichen Bearbeitungstisch angeordnet ist. Die Führung der Bearbeitung an dem Werkstück erfolgt über die Verschiebung des Werkstückes mittels des zweiten Bearbeitungstisches. Auch die auf den folgenden Seiten beschriebenen Laserschweißanlagen sehen eine Bearbeitungsführung mittels der Bewegung des Werkstückes vor. Auf das Schweißen mit Lasern wird auf Seite 297 eingegangen.

Aufgabe der Erfindung ist die Angabe eines Verfahrens zum Laserschweißen eines Werkstückes, welches eine besonders geringe Beeinträchtigung der um die Schweißnaht liegenden Materialbereiche ermöglicht.

Erfindungsgemäß wird diese Aufgabe gelöst durch Angabe eines Verfahrens zum Laserschweißen eines Werkstückes entlang einer Schweißlinie, bei dem ein Laserstrahl durch Bewegung einer optischen Ablenkeinheit entlang der Schweißlinie geführt wird.

Es wird somit erstmals vorgeschlagen, den Laserstrahl beim Laserstrahlschweißen mittels der Bewegung einer optischen Ablenkeinheit zu führen. Während sonst das Werkstück unter dem bearbeitenden Laserstrahl bewegt wurde, wird nunmehr der Laserstrahl selbst bewegt. Die Kontrolle dieser Bewegung über eine optische Ablenkeinheit ermöglicht eine apparativ vergleichsweise wenig aufwendige Realisierung. Insbesondere wird aber durch die Bewegung einer solchen optischen Ablenkeinheit eine hohe Bearbeitungsgeschwindigkeit erzielt. Dies hat zur Folge, dass der Wärmeeintrag des Lasers in das Werkstück lokal stark begrenzt ist. Hierdurch wird das an die Schweißnaht angrenzende Material durch den Schweißprozess kaum in Mitleidenschaft gezogen. Insbesondere der Ausbildung von Rissen durch den Schweißprozess wird somit entgegengewirkt.
a) Vorzugsweise weist die Schweißlinie eine Rotationssymmetrie auf. Weiter bevorzugt ist die Schweißlinie kreissymmetrisch. In einer solchen Anordnung ist es besonders günstig, den Laserstrahl in einer rotatorischen Bewegung schnell entlang der Schweißlinie mittels der Bewegung der optischen Ablenkeinheit zu führen. Weiter bevorzugt weist die Schweißlinie einen maximalen Durchmesser von 20 mm auf. Gerade bei einem solchen, vergleichsweise kleinen Schweißbereich erfordert die Bewegung des Laserstrahls eine hohe Winkelgeschwindigkeit, die durch die Bewegung der optischen Ablenkeinheit realisierbar ist. Dadurch, dass nur die optische Ablenkeinheit bewegt werden muss, brauchen keine weiteren schweren und konstruktiv nur aufwendig bewegbaren Teile der zugehörigen Laseranlage bewegt zu werden.
b) Bevorzugt wird die Ablenkeinheit rotiert. Weiter bevorzugt weist dabei die Ablenkeinheit eine optische Achse auf, so wie eine parallel zur optischen Achse orientierte Rotationsachse, wobei die Rotationsachse von der optischen Achse in einem Excenterabstand beabstandet ist und wobei der Laserstrahl parallel und beabstandet zur optischen Achse in die Ablenkeinheit einfällt. Eine Rotation der Ablenkeinheit ist apparativ vergleichsweise einfach zu realisieren. Insbesondere ist die Ablenkeinheit eine Linse, die exzentrisch in einem Kugellager gelagert ist und durch die der Laserstrahl exzentrisch hindurchgeht. Durch diesen exzentrischen Einfall einerseits und die Rotation der Linse andererseits wird der Laserstrahl kreisförmig entlang der Schweißlinie abgelenkt. Entsprechend kann auch z.B. ein Spiegel anstatt der Linse zum Einsatz kommen. Statt einer Linse und einem Spiegel kann natürlich auch ein Prisma oder eine Keilplatte für die Ablenkeinheit in Frage kommen. Weiter bevorzugt ist der Excenterabstand während des Schweißprozesses variierbar. Hierdurch kann auch eine z.B. elliptische oder spiralförmige Schweißlinie geschweißt werden.
c) Bevorzugtermaßen wird ein zweiter Laserstrahl gleichzeitig mit dem Laserstrahl und zu diesem versetzt durch die Bewegung der optischen Ablenkeinheit entlang der Schweißlinie geführt. Insbesondere kann bei einer rotationssymmetrischen Schweißlinie eine Anordnung der beiden Laserstrahlen gegenüberliegend zueinander erfolgen, so dass durch die Bewegung der optischen Ablenkeinheit jeweils ein Halbbogen der Schweißlinie durch einen der Laserstrahlen geschweißt wird. Dies hat einerseits eine Verkürzung der Bearbeitungszeit und andererseits eine Homogenisierung der Wärmeverteilung zur Folge, welche wiederum die Materialbeeinträchtigung günstig beeinflusst.
d) Bevorzugt ist die Ablenkeinheit ein Spiegel, der verkippt wird. Dies kann z.B. ein ebener Spiegel sein, der auf einer Dreibeinanordnung beweglicher Elemente angeordnet ist, die so verstellt werden, dass der Spiegel entsprechend der gewünschten Ausfallsrichtung für die Bearbeitung gekippt wird. Insbesondere sind piezoelektrische Stellelemente geeignet.
e) Vorzugsweise ist das Werkstück eine gegossene Gasturbinenschaufel, in die ein Verschlussstift in eine gussbedingte Öffnung eingeschweißt wird. Weiter bevorzugt besteht die Gasturbinenschaufel aus einer Nickel- oder Kobaltbasissuperlegierung. Weiter bevorzugt ist sie gerichtet erstarrt oder einkristallin. Wie einleitend ausgeführt, besteht bei einer gegossenen Gasturbinenschaufel die Notwendigkeit, die gussbedingten Öffnungen zum Einsparen von Kühlluft zu verschließen. Wie ebenfalls erwähnt führt dabei ein konventioneller Schweißprozess zu einer Materialbeeinträchtigung, was insbesondere für gerichtet erstarrte und einkristalline Gasturbinenschaufeln aus einer Superlegierung gilt. Durch den beschriebenen Laserschweißprozess kann diese Materialbeeinträchtigung stark herabgesetzt werden. Dafür ist es allerdings nötig, den Laserstrahl vergleichsweise schnell entlang der Schweißlinie zu führen. Bei den vergleichsweise geringen Abmessungen der zu verschließenden Öffnungen führt dies zu einer hohen Winkelgeschwindigkeit des Laserstrahls. Diese ist nicht oder nur sehr aufwendig durch eine Bewegung des Werkstückes oder aber der Laseranlage zu realisieren. Die Bewegung lediglich der optischen Ablenkeinheit löst dieses Problem.

Die Erfindung wird anhand der Zeichnung beispielhaft näher erläutert. Es zeigen teilweise schematisch und nicht maßstäblich:
- Figur 1 eine Aufsicht einer Gasturbinenschaufel,
- Figur 2 einen Ausschnitt einer Gasturbinenschaufel mit einer zu verschweißenden, gussbedingten Öffnung,
- Figur 3 eine Laserschweißanlage,
- Figur 4 eine Aufsicht auf ein geschweißtes Werkstück,
- Figur 5 eine Aufsicht auf eine rotierende Ablenkeinheit,
- Figur einen Längsschnitt durch eine optische Ablenkeinheit mit Rotationsantrieb,
- Figur 7 eine mit kippbarem Spiegel ausgeführte optische Ablenkeinheit,
- Figur 8 eine Aufsicht auf ein Werkstück mit einer Schweißung mittels zweier Laserstrahlen.

Gleiche Bezugszeichen haben in den verschiedenen Figuren die gleiche Bedeutung.

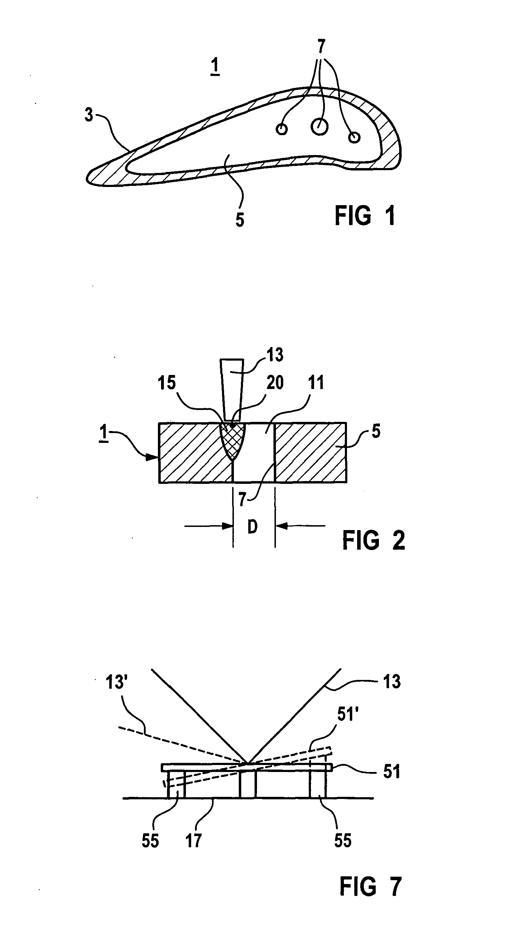

Figur 1 zeigt schematisch die Aufsicht auf eine Gasturbinenschaufel 1. Ein Schaufelblatt 3 schließt mit einer Schaufelspitze 5 ab. In dieser Schaufelspitze 5 liegen gussbedingte Öffnungen 7. Diese sind durch die Halterung von Gusskernen mittels Sicherungsstiften nach Entfernen der Sicherungsstifte im Anschluss an das Abgießen entstanden. Die Gasturbinenschaufel 1 ist hohl ausgeführt um im Betrieb ein Einleiten von Kühlluft für die Kühlung der Gasturbinenschaufel 1 zu ermöglichen. Ein erheblicher Teil dieser Kühlluft tritt aus den gussbedingten Öffnungen 7 aus. Zur Vermeidung dieses Kühlluftverlustes ist es nötig, die gussbedingten Öffnungen 7 zu verschließen. Ein besonders materialschonendes Schweißverfahren ist dabei das Laserschweißen, da die Energie gezielt und gerichtet (Tiefschweißeffekt) eingebracht wird. Dies ermöglicht vergleichsweise hohe Bearbeitungsgeschwindigkeiten bei moderater Energiezufuhr.

Figur 2 ist ein Ausschnitt einer Gasturbinenschaufel 1 mit einer gussbedingten Öffnung 7. In die gussbedingte Öffnung 7 ist ein Verschlussstift 11 eingesetzt. Mittels eines Laserstrahles 13 wird dieser Verschlussstift 11 entlang einer Schweißlinie 20 durch Erzeugung einer Schweißnaht 15 verschweißt. Zur Schonung des die Schweißnaht 15 umgebenden Materiales ist es notwendig, den Laserstrahl 13 vergleichsweise schnell entlang der Schweißlinie 20 zu führen. Durch die vergleichsweise geringen Abmessungen der gussbedingten Öffnungen 7 mit einem Durchmesser D < 30 mm, insbesondere < 20 mm und vorzugsweise < 10 mm ergibt sich eine relativ hohe Winkelgeschwindigkeit, mit der der Laserstrahl 13 bewegt werden muss.

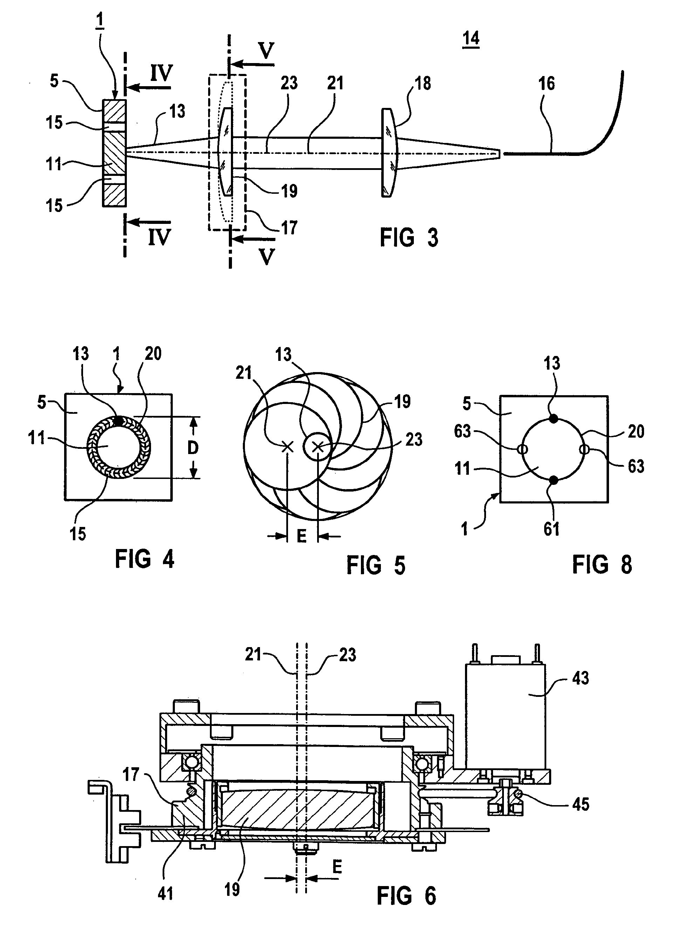

Figur 3 zeigt schematisch eine Laserschweißanlage 14. Ein Lichtleitkabel 16 dient dazu der Führung des Laserstrahles 13. Mittels einer Optik 18 wird der Laserstrahl 13 aufgeweitet und parallelisiert. Der Laserstrahl 13 tritt sodann in eine optische Ablenkeinheit 17 ein. Diese optische Ablenkeinheit 17 weist eine Linse 19 auf, die rotierbar um eine Rotationsachse 23 angeordnet ist. Die optische Achse 21 der Linse 19 ist hierbei parallel aber versetzt zur Rotationsachse 23 orientiert. Der Laserstrahl 13 tritt entlang der Rotationsachse 23 in die Linse 19 ein. Durch die Rotation der Linse 19 wird der Laserstrahl 13 kreisförmig abgelenkt. Hierdurch wird der Laserstrahl 13 entlang der Schweißlinie 20 des zu schweißenden Werkstückes 1 geführt.

Figur 4 zeigt eine Aufsicht auf das Werkstück der Figur 3.

Figur 5 zeigt eine Aufsicht auf die optische Ablenkeinheit 17. Die optische Achse 21 ist in einem Excenterabstand **E** von der Rotationsachse 23 angeordnet. Durch Variation des Excenterabstandes **E** während des Schweißprozesses sind auch andere als kreisförmige Schweißlinien 20 schweißbar. Insbesondere sind elliptische Schweißlinien 20 oder spiralförmige Schweißlinien 20 erzielbar.

Figur 6 zeigt in einem Längsschnitt die optische Ablenkeinheit 17 sowie ihre Lagerung und ihren Antrieb. Die Linse 19 ist in einem Kugellager 41 gehaltert. In dem Kugellager 41 ist die Linse 19 exzentrisch angeordnet, wobei der Excenterabstand **E** zwischen der Rotationsachse 23 des Kugellagers 41 und der optischen Achse 21 der Linse 19 einstellbar ist. Über einen Elektromotor 43 und einem Keilriemen 45 ist das Kugellager 41 und damit die Linse 19 rotierbar. Natürlich ist auch denkbar, statt der Linse 19 einen Spiegel oder ein Prisma zu verwenden.

Figur 7 zeigt eine optische Ablenkeinheit 17, bei der ein Spiegel 51 verkippt wird. Dazu ist der Spiegel 51 auf Stellelementen 55 in Form eines Dreibeines angeordnet. Diese Stellelemente 55 können z.B. piezoelektrisch ausgeführt sein. Je nach Ansteuerung der Stellelemente 55 wird der Spiegel 51 verkippt, insbesondere auch in einer rotationssymmetrischen Führung. Die gestrichelt dargestellte Stellung des Spiegels 51- ergibt die gestrichelt dargestellte Ausfallrichtung des Laserstrahls 13-.

Durch die optische Ablenkeinheit 17 können auch mehrere Laserstrahlen geführt werden. Dies zeigt Figur 8 am Beispiel von zwei Laserstrahlen 13,61. Die beiden Laserstrahlen 13,61 sind einander gegenüberliegend vor einer kreisförmigen Schweißlinie 20 angeordnet. Durch Bewegung der optischen Ablenkeinheit 17 beschreibt jeder der Laserstrahlen 13,61 einen Halbkreis. Hierdurch ergibt sich einerseits eine Verkürzung des Schweißprozesses und andererseits eine homogenere Wärmeverteilung entlang der Schweißlinie 20. Zur weiteren Homogenisierung der Wärmeverteilung und Kontrolle des Abkühlverhaltens sind außerdem zwei weitere Laserstrahlen 63 einander gegenüberliegend und zwischen den Laserstrahlen 13,61 angeordnet. Diese weiteren Laserstrahlen 63 weisen eine niedrigere Leistung auf und sind vorzugsweise als Diodenlaser ausgeführt. Sie dienen der Kontrolle und Beeinflussung des Abkühlverhaltens entlang der Schweißlinie 20. Hierdurch ist eine weitere Verringerung der Materialbeeinträchtigung und der Rissbildung erreichbar.

## Patentansprüche

1. Verfahren zum Laserschweißen eines Werkstückes (1) entlang einer Schweißlinie (20),
bei dem ein Laserstrahl (13) durch Bewegung einer optischen Ablenkeinheit (17) entlang der Schweißlinie (20) geführt wird, und
bei dem die Ablenkeinheit (17) eine optische Achse (21) aufweist und um eine parallel zur optischen Achse (21) orientierte Rotationsachse (23) rotiert wird,
wobei die Rotationsachse (23) von der optischen Achse (21) in einem Excenterabstand **E** beabstandet ist und
wobei der Laserstrahl (13) parallel und beabstandet zur optischen Achse (21) in die Ablenkeinheit 17 einfällt, und bei dem der Excenterabstand **E** während des Schweißprozesses variierbar ist.

2. Apparatur zum Laserschweißen eines Werkstückes (1) entlang einer Schweißlinie (20),
bei dem ein Laserstrahl (13) durch Bewegung einer optischen Ablenkeinheit (17) entlang der Schweißlinie (20) führbar ist, und
bei dem die Ablenkeinheit (17) eine optische Achse (21) aufweist und um eine parallel zur optischen Achse (21) orientierte Rotationsachse (23) rotierbar ist,
wobei die Rotationsachse (23) von der optischen Achse (21) in einem Excenterabstand **E** beabstandet ist und
wobei der Laserstrahl (13) parallel und beabstandet zur optischen Achse (21) in die Ablenkeinheit 17 einfällt, und bei dem der Excenterabstand **E** während des Schweißprozesses variierbar ist.

3. Apparatur oder Verfahren nach Anspruch 1 oder 2,
bei dem die Schweißlinie (20) eine Rotationssymmetrie aufweist.

4. Apparatur oder Verfahren nach Anspruch 1, 2 oder 3,
bei dem die Schweißlinie (20) kreissymmetrisch ist.

5. Apparatur oder Verfahren nach Anspruch 3 oder 4,
bei dem die Schweißlinie (20) einen maximalen Durchmesser **D** von 20 mm aufweist.

6. Apparatur oder Verfahren nach Anspruch 1 oder 2,
bei dem ein zweiter Laserstrahl (61) gleichzeitig mit dem Laserstrahl (13) und zu diesem versetzt durch die Bewegung der optischen Ablenkeinheit (17) entlang der Schweißlinie (20) geführt wird.

7. Apparatur oder Verfahren nach Anspruch 1 oder 2,
bei dem die Ablenkeinheit (17) ein Spiegel ist, der verkippt wird.

8. Apparatur oder Verfahren nach Anspruch 1 oder 2,
bei dem das Werkstück (1) eine gegossene Gasturbinenschaufel (1) ist,
in die ein Verschlussstift in eine gussbedingte Öffnung (7) eingeschweißt wird.

9. Apparatur oder Verfahren nach Anspruch 8,
bei dem die Gasturbinenschaufel (1) aus einer Nickel- oder Kobaltbasissuperlegierung besteht.

10. Apparatur oder Verfahren nach Anspruch 9,
bei dem die Gasturbinenschaufel (1) gerichtet erstarrt oder einkristallin ist.
